# EUROPEAN PATENT SPECIFICATION

(11) **EP 1 526 053 B1**
(45) Date of publication and mention of the grant of the patent: **15.11.2006**
(21) Application number: 04024518.5
(22) Date of filing: 14.10.2004
(51) Int. Cl.: B60T 11/16, F16D 25/08, F16J 15/32, B60T 11/236

(54) **A master cylinder**
Geberzylinder
Maître-cylindre

(30) Priority: 21.10.2003 JP 2003360561
(43) Date of publication of application: 27.04.2005
(73) Proprietor: Nabtesco Corporation, Tokyo (JP)
(72) Inventor: Okuma, Hiroshi, Minato-ku Tokyo (JP)
(74) Representative: Müller-Boré & Partner Patentanwälte

(56) References cited:
- EP-A- 0 778 426
- EP-A- 0 850 814
- US-A1- 2002 116 924
- US-A1- 2003 010 028
- PATENT ABSTRACTS OF JAPAN vol. 2000, no. 10, 17 November 2000 (2000-11-17) & JP 2000 192990 A (LUK LAMELLEN & KUPPLUNGSBAU GMBH), 11 July 2000 (2000-07-11) & US 6 336 329 B1 (ADLER DIETER ET AL) 8 January 2002 (2002-01-08)

## Description

The present invention relates to a master cylinder in which sealing is provided between an outer circumferential surface of a piston and an inner circumferential surface of a cylinder by a plurality of annular sealing members.

There has been known a conventional master cylinder shown in FIG. 8, e.g., in Japanese Unexamined Patent Publication No. 2000-192990 and in US Patent 6,336,329 B1.

In this master cylinder, a piston 103 is provided inside a guide sleeve 102 inserted into an accommodation hole 101 formed in a cylinder main body 100, and a first annular sealer 104 and a second annular sealer 105 both made of lip packing are arranged outside the piston 103 with a spacer disk 106 provided therebetween and are so held as not to come out by the guide sleeve 102. Further, the cylinder main body 100 is made of a resin and the outer surface of the piston 103 is made of a steel.

This master cylinder can be made lighter since the cylinder main body 100 is resin-made and has the following effects. Specifically, the first and second annular sealers 104, 105 held in the cylinder main body 100 are made of resin lip packing, whereas the outer surface of the piston_103 in contact with these sealers 104, 105 is steel-made. Thus, an occurrence of squeak and rattle caused by the stick-slip phenomenon of the lip packing can be effectively prevented due to a material difference (as compared to a case where the member to be brought into contact with the lip packing is resin-made). The stick-slip phenomenon is a phenomenon which occurs during the operation of the master cylinder such as chatter vibration, pulsation and breathing.

Since both the first and second annular sealers need to be so held as not to come out against a pressure in a hydraulic chamber by the guide sleeve 102 in the conventional master cylinder, the guide sleeve 102 and the cylinder main body 100 need to be strongly coupled to each other. The strong coupling means leads to a higher cost, thereby making it difficult to provide an inexpensive master cylinder.

It is an object of the present invention to provide a master cylinder which is free from the problems residing in the prior art.

It is another object of the present invention to provide a master cylinder which is inexpensive and can suppress occurrence of squeak and rattle caused by the stick-slip phenomenon.

According to an aspect of the present invention, a cylinder main body is made of a resin, a piston placed in a cylinder hole formed in the cylinder main body to define a hydraulic chamber in cooperation with the inner circumferential surface of the cylinder hole, and a guide sleeve having a leading end portion inserted in a mount hole formed in the cylinder main body. The cylinder main body is formed with a stepped portion at a boundary between the mount hole and the cylinder hole. The piston includes a leading end portion movable back and forth in the cylinder hole so as to expand and contract a hydraulic chamber defined in the cylinder hole.

A first annular sealer including an inner annular sealing member and an outer annular sealing member is held on the outer circumferential surface at the leading end portion of the piston and slidable on the inner circumferential surface of the cylinder hole as the piston moves back and forth. The inner annular sealing member is made of a soft material and the outer annular sealing member is made of a material harder than that of the inner annular sealing member.

A second annular sealer is placed between a stepped portion and a leading end portion of the guide sleeve. The second annular sealer has an elastically deformable sliding portion slidable on the outer circumferential surface of a rear end portion of the piston. At least a portion of the outer circumferential surface of the piston to be held in contact with the second annular sealer is made of a metal.

These and other objects, features and advantages of the present invention will become more apparent upon a reading of the following detailed description and accompanying drawings, in which:
FIG. 1A is a front view in section of a master cylinder according to an embodiment of the present invention;
FIG. 1B is a front view in section enlargedly showing the area A in FIG. 1A;
FIG. 2 is a sectional view of a locking device provided in the master cylinder of FIGS. 1A and 1B;
FIGS. 3A and 3B are a sectional view and a right side view showing a cup spacer provided in the master cylinder of FIGS. 1A and 1B;
FIGS. 4A and 4B are a sectional view and a right side view of a supply cup provided in the master cylinder of FIGS. 1A and 1B;
FIGS. 5A and 5B are a right side view and a sectional view of an inner seal ring provided in the master cylinder of FIGS. 1A and 1B;
FIGS. 6A and 6B are a right side view and a sectional view of an outer seal ring provided in the master cylinder of FIGS. 1A and 1B;
FIGS. 7A and 7B are a sectional view and a left side view of an annular-recess forming member provided in the master cylinder of FIGS. 1A and 1B; and

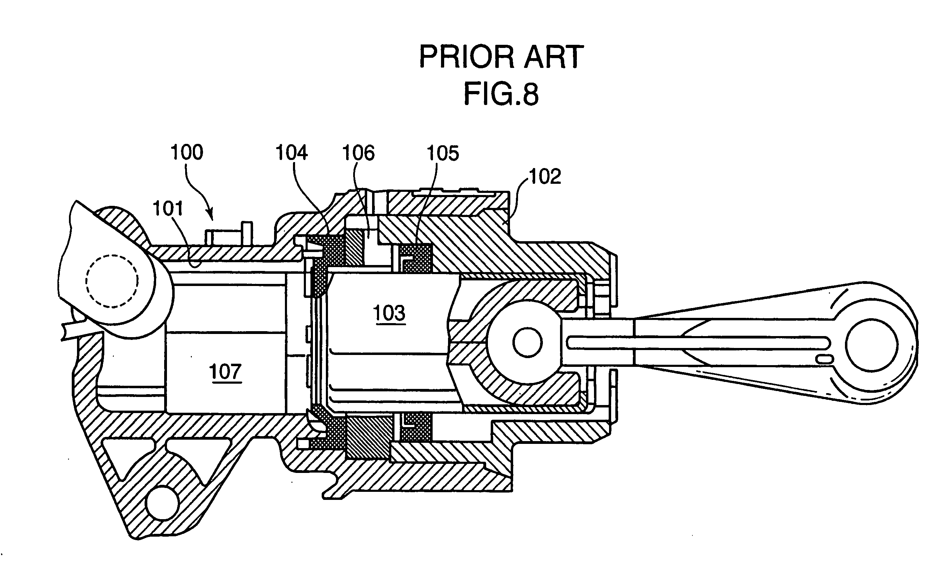

FIG. 8 is a front view in section showing a conventional master cylinder.

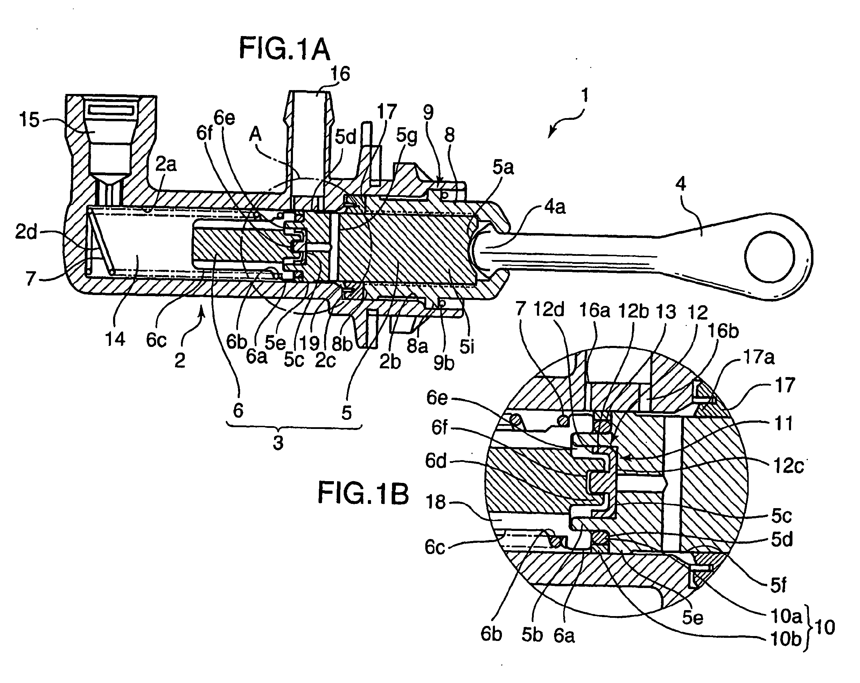

Referring to FIGS. 1A and 1B showing a construction of a master cylinder embodying the present invention, a master cylinder 1 includes a cylinder main body 2 formed with a cylinder hole 2a and a mount hole 2b concentrically continuous with the cylinder hole 2a, a guide sleeve 8 inserted into the mount hole 2b, a piston 3 which is so provided inside the cylinder hole 2a and the mount hole 2b as to be movable back and forth, a first annular sealer 10 provided on the outer circumferential surface of the piston 3, and a second annular sealer 17 provided inside the mount hole 2b of the cylinder main body 2.

In order to be lightweight, the cylinder main body 2 is made of a resin, e.g., a glass-reinforced polyamide, and the cylinder hole 2a and the mount hole 2b are formed to have round cross sections, wherein the mount hole 2b has a larger inner diameter than the cylinder hole 2a and a stepped portion 2c is formed at a boundary between the cylinder hole 2qa and the mount hole 2b. The guide sleeve 8 is formed to have a substantially hollow cylindrical shape, and an annular locking piece 8a projecting outward is provided on the outer circumferential surface of the guide sleeve 8. The outer diameter of the locking piece 8a is slightly smaller than the inner diameter of the mount hole 2b in order to enable the insertion of the guide sleeve 8 into the mount hole 2b, and the inner diameter of the guide sleeve 8 is set to be substantially equal to that of the cylinder hole 2a.

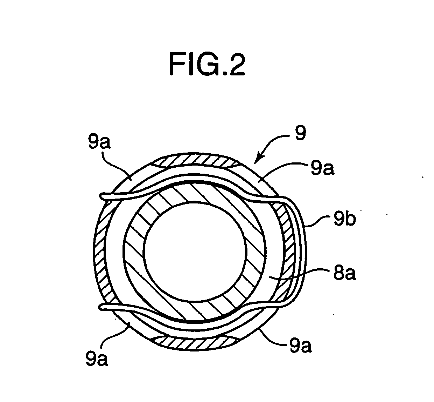

With a leading side (left side in FIG. 1A) of the guide sleeve 8 inserted in the mount hole 2b and the second annular sealer 17 squeezed between a leading end portion 8b and the stepped portion 2c, the guide sleeve 8 is locked by a locking device 9 detachably mounted on the cylinder main body 2. As shown in FIG. 2, the locking device 9 includes the locking piece 8a, through holes 9a provided at four positions at a side of the cylinder main body 2 more rightward than the locking piece 8a with the guide sleeve 8 mounted in the cylinder main body 2, and a locking member 9b obtained by bending a pin into U-shape. The locking member 9b is mounted such that one-end section thereof is inserted through two of the four through holes 9a and the other-end section thereof is inserted through the remaining two through holes 9a. In this way, the guide sleeve 8 is so mounted as not to come out of the cylinder main body 2. If the locking member 9b is pulled out, the guide sleeve 8 can be pulled out of the cylinder main body 2.

The guide sleeve 8 thus mounted into the cylinder main body 2 guides the piston 3 by its inner circumferential side. Further, a leading end portion 4a of a force transmitting bar 4, for example, provided at an operating side of a clutch device is inserted into an opening at the right end of the guide sleeve 8.

The piston 3 includes a piston main body 5 having a round cross section and an annular-recess forming member 6 having a round cross section and mountable on the left side (leading end side) of the piston main body 5 from left. An inward (leftward) recessed receiving portion 5a is formed at the right end of the piston main body 5 which receives a pushing force from the leading end portion 4a of the force transmitting bar 4. On the other hand, an annular projection 5b projecting outward is formed at a radially intermediate position of the left end of the piston main body 5, and an inner end surface 5c of the annular projection 5b is so formed as to be located at the right side of an outer end surface 5d of the annular projection 5b. A large-diameter portion 5e having an outer diameter substantially equal to the inner diameter of the cylinder hole 2a is formed at the left end of the piston main body 5, and the other part of the piston main body 5 is formed into a small-diameter portion 5f having an outer diameter slightly shorter than the inner diameter of the cylinder hole 2a.

The piston main body 5 is formed of a metallic material (e.g., aluminum material). From the viewpoint of suppressing the stick-slip phenomenon, the outer circumferential surface of the piston main body 5 from the large-diameter portion 5e partly including a portion to be brought into sliding contact with the second annular sealer 17 to the small-diameter portion 5f may be made of a metal, e.g., an aluminum material, and the remaining part may be formed of a resin, e.g., a glass-reinforced polyamide. A hydraulic supplying passage 5g which is open in the inner end surface 5c and the small-diameter portion 5f is formed in the piston main body 5. This hydraulic supplying passage 5g makes one opening in the inner end surface 5c while making a plurality of (two in shown example) openings in the small-diameter portion 5f. The opening in the inner end surface 5c and those in the small-diameter portion 5f are located at the opposite sides with respect to an annular recess 13, and the opening in the inner end surface 5c is located more toward the center axis than the annular recess 13.

The annular-recess forming member 6 is comprised of a large-diameter portion 6a, a middle-diameter portion 6b and a small-diameter portion 6c in this order from the side of the piston main body 5 (from right side), wherein the outer diameter of the large-diameter portion 6a is slightly smaller than the inner diameter of the cylinder hole 2a. An annular projection 6d projecting outward (rightward) is formed at a radially intermediate position of the right end surface of the annular-recess forming member 6, and an annular recess 6e into which the annular projection 5b is insertable is formed outside the annular projection 6d, whereas a round recess 6f is formed inside the annular projection 6d. The annular projection 6d of the annular-recess forming member 6 is shorter than the annular projection 5b of the piston main body 5, so that a clearance is defined to the inner end surface 5c of the piston main body 5 when the annular projection 5b is in contact with the bottom surface of the annular recess 6e.

One end (right end) of a coil spring 7 is in contact with a stepped portion between the large-diameter portion 6a and the middle-diameter portion 6b, whereas the other end (left end) thereof is in contact with an inner end 2b at the left side of the cylinder hole 2a. This coil spring 7 biases the annular-recess forming member 6 toward the piston main body 5. The inner diameter of the middle-diameter portion 6b is set to be substantially equal to the outer diameter of the coil spring 7, and the middle-diameter portion 6b is fitted in the one end of the coil spring 7.

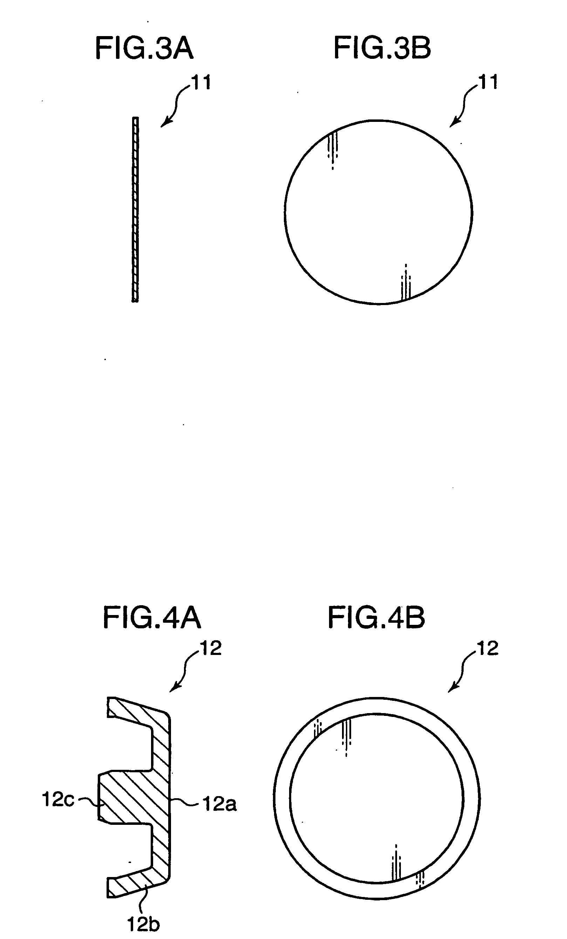

A disk-shaped cup spacer 11 shown in FIGS. 3A and 3B and a supply cup 12 shown in FIGS. 4A and 4B are inserted into the round recess 6f with the former located at a more back side of the round recess 6f than the latter. The cup spacer 11 is provided to prevent the supply cup 12 from entering the hydraulic supplying passage 5f and is a disk having substantially the same diameter as the round recess 6f. The supply cup 12 is comprised of a round portion 12a, a pivotal portion 12b extending obliquely to horizontal direction from the outer periphery of the round portion 12a, and a supporting portion 12c extending in horizontal direction from the center of the round portion 12a. The supporting portion 12c is inserted into the round recess 6f to be supported, and the pivotal portion 12b is set between the annular recess 6e and the annular projection 5b inserted into the annular recess 6e.

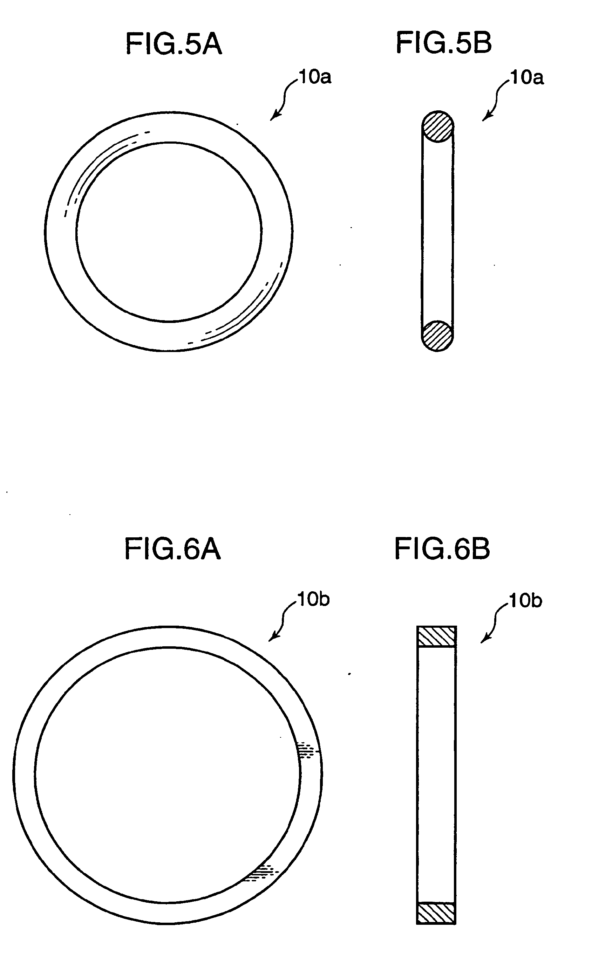

The annular recess 13 is formed in a section surrounded by the annular projection 5b and the outer end surface 5d of the piston main body 5 and the right end surface of the annular-recess forming member 6, and the first annular sealer 10 is fitted into the annular recess 13 to be so held as not to come out. The first annular sealer 10 includes an inner seal ring (inner annular sealing member) 10a which is located at an inner side and is a soft O-ring as shown in FIG. 5, and an outer seal ring (outer annular sealing member) which is located at an outer side and is a ring made of a highly rigid material such as a fluorocarbon resin and having a rectangular cross section shown in FIG. 6B. As the inner seal ring 10a is deformed, the outer seal ring 10b is pressed against the inner circumferential surface of the cylinder hole 2a. This outer seal ring 10b slides along the inner circumferential surface of the cylinder hole 2a as the piston 3 moves back and forth. As a result, a hydraulic chamber 14 is formed in a section surrounded by the inner circumferential surface and the back end 2d of the cylinder hole 2a and the piston 3, and this hydraulic chamber 14 expands and contracts as the piston 3 moves back and forth.

The piston main body 5 and the annular-recess forming member 6 are arranged in the cylinder hole 2a as follows so that the left end of the piston main body 5 and the right end of the annular-recess forming member 6 are held in contact with each other. Specifically, the coil spring 7 is inserted into the cylinder hole 2a, and the small-diameter portion 6c and the middle-diameter portion 6b of the annular-recess forming member 6 are inserted into the coil spring 7. Thereupon, the one end (right end) of the coil spring 7 is held in contact with the stepped portion between the large-diameter portion 6a and the middle-diameter portion 6b, and the other end (left end) thereof is held in contact with the back end 2d of the cylinder hole 2a at the left side. Further, the middle-diameter portion 6b is fitted into the one end of the coil spring 7 and the outer diameter of the large-diameter portion 6a is set to be slightly smaller than the inner diameter of the cylinder hole 2a as described, whereby the coil spring 7 and the annular-recess forming member 6 are so held in the cylinder hole 2a as to be concentric with the longitudinal center axis of the cylinder hole 2a. Subsequently, the first annular sealer 10 is fitted on the outer circumferential surface of the annular projection 5b, and the piston main body 5 having the cup spacer 11 and the supply cup 12 inserted into the round recess 6f is inserted into the cylinder hole 2a from the end surface thereof where the annular projection 5b is formed. As a result, the annular projection 5b is inserted into the annular recess 6e. Further, the annular recess 13 is formed in the section surrounded by the annular projection 5b and the outer end surface 5d of the piston main body 5 and the right end surface of the annular-recess forming member 6, and the first annular sealer 10 is so held in the annular recess 13 as not to come out. Furthermore, the supporting portion 12c provided in the center of the supply cup 12 is inserted into the round recess 6f, whereby the cup spacer 11 and the supply cup 12 are so held inside the annular projection 5b as not to come out.

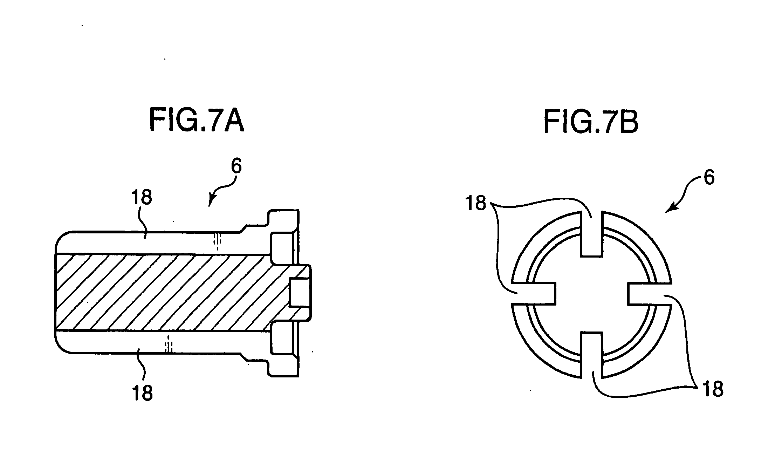

FIGS. 7A and 7B are a front view in section and a left side view of the annular-recess forming member 6. As shown in FIGS. 7A and 7B, grooves 18 are formed in the outer circumferential surface of the annular-recess forming member 6. These grooves 18 communicate with the hydraulic chamber 14 and the annular recess 13 and are elongated along the longitudinal center axis of the annular-recess forming member 6 in this embodiment. Four grooves 18 are circumferentially evenly arranged in this embodiment. The bottoms of the grooves 18 reach the annular recess 6e in this embodiment as shown in FIG. 1B and are located at radially specified positions.

An output passage 15 communicating with the back end 2d of the cylinder hole 2a is formed at the left end of the cylinder main body 2, and a hydraulic passage 16 communicating with the cylinder hole 2a is formed substantially in the middle of the cylinder main body 2. The output passage 15 is coupled to an operating cylinder for operating the clutch in this example, whereby the operating cylinder is operated by a hydraulic fluid supplied via the output passage 15 to control the engagement and disengagement of the clutch. The hydraulic passage 16 is coupled to an unillustrated reservoir tank, whereby a hydraulic fluid is supplied from and returned to the reservoir tank. A communication hole 16a and a supply hole 16b are formed in a portion of the hydraulic passage 16 near the cylinder hole 2a.

At the right side of the supply hole 16b, the second annular sealer 17 is provided to prevent the hydraulic fluid from escaping by leaking toward the force transmitting bar 4 via the small-diameter portion 5f having the outer diameter slightly smaller than the inner diameter of the cylinder hole 2a. This second annular sealer 17 has a groove formed in the entire circumference to have a U-shaped cross section, and is made of lip packing having an elastically deformable sliding portion 17a at the left inner side in the shown example. In a mounted state, the second annular sealer 17 is held on the cylinder main body 2 by being squeezed between the leading end portion 8b of the guide sleeve 8 locked in the cylinder main body 2 by the locking device 9 and the stepped portion 2c of the cylinder main body 2. The piston 3 moves back and forth with the openings of the hydraulic supplying passage 5g in the small-diameter portion 5f are located at the left side of the second annular sealer 17. Thus, an area defined between the piston main body 5 and the cylinder hole 2a and between the second and first annular sealers 17 and 10 functions as a hydraulic supplying chamber 19 for supplying the hydraulic fluid to the hydraulic chamber 14. The hydraulic fluid from this hydraulic supplying chamber 19 is supplied to the hydraulic chamber 14 via a hydraulic supplying passage comprised of the hydraulic supplying passage 5g, the annular recess 6e and the grooves 18.

Next, the position of the piston 3 and the flow of the hydraulic fluid are described.

FIGS. 1A and 1B show a state where the piston 3 is located at its right end, and the piston 3 moves back and forth along transverse direction at the left side of the right end position.

First, in the state shown in FIGS. 1A and 1B, the first annular sealer 10 is positioned between the communication hole 16a and the supply hole 16b. As the clutch pedal is operated in this state to move the force transmitting bar 4 leftward against the biasing force of the coil spring 7, the first annular sealer 10 comes to be located at the left side of the communication hole 16a, thereby shutting off the connection between the reservoir tank and the hydraulic chamber 14. As the force transmitting bar 4 is moved further leftward, the hydraulic chamber 14 is contracted to pressurize the hydraulic fluid in the hydraulic chamber 14. Further, as the piston 3 is moved toward the left end, the hydraulic supplying passage 5g comes to communicate with the communication hole 16a at the left side from its state communicated with the supply hole 16b at the right side. Since there is a pressure difference of the hydraulic fluid between the hydraulic chamber 14 and the hydraulic supplying passage 5g holding the supply cup 12 in cooperation, i.e., the pressure in the hydraulic chamber 14 is higher than that in the hydraulic supplying passage 5g, the cup spacer 11 and the supply cup 12 are pressed toward the hydraulic supplying passage 5g and the pivotal portion 12b of the supply cup 12 is brought into close contact with the inner circumferential surface of the annular projection 5b, with the result that the hydraulic fluid from the reservoir tank is not supplied to the hydraulic chamber 14.

Thereafter, when the clutch pedal is released, the piston 3 and the force transmitting bar 4 are moved rightward by the biasing force of the coil spring 7. As a result, the state of the hydraulic chamber changes from the contracted state to the expanded state. As the piston 3 is moved to the right end, the hydraulic supplying passage 5g comes to communicate with the supply hole 16b at the right side from its state communicating with the communication hole 16a at the left side. Since there is a pressure difference of the hydraulic fluid between the hydraulic chamber 14 and the hydraulic supplying passage 5g holding the supply cup 12 in cooperation, i.e., the pressure in the hydraulic chamber 14 becomes a negative pressure and, therefore, lower than that in the hydraulic supplying passage 5g, the cup spacer 11 and the supply cup 12 move away from the hydraulic supplying passage 5g, and the pivotal portion 12b of the supply cup 12 is bent inward to move away from the inner circumferential surface of the annular projection 5b, whereby the hydraulic fluid from the reservoir tank is supplied into the annular recess 6e. Since the bottoms of the grooves 18 of the annular-recess forming member 6 are formed to reach this annular recess 6e, the hydraulic fluid from the reservoir tank comes to be supplied to the hydraulic chamber 14 via the grooves 18. The above supply cup 12 is adapted to controllably supply or stop supplying the hydraulic fluid through the hydraulic supplying passage.

In the master cylinder of this embodiment thus constructed, the first annular sealer 10 is constituted by two annular sealing members (inner seal ring 10a and outer seal ring 10b) held one over the other on the piston 3. Thus, even if the cylinder main body 2 is resin-made, an occurrence of squeak and rattle caused by the stick-slip phenomenon can be effectively suppressed by making the outer seal ring 10b of a hard material while ensuring a good sealing function by the elastic deformation of the inner seal ring 10a. Although the second annular sealer 17 is lip packing having the elastically deformable sliding portion 17a which can slide on the outer circumferential surface of the piston main body 5, a part of the outer circumferential surface of the piston main body 5 to be brought into contact with the second annular sealer 17 is made of a metal. Thus, the second annular sealer 17 can also suppress an occurrence of squeak and rattle caused by the stick-slip phenomenon. In addition, the second annular sealer 17 formed by the lip packing is squeezed between the stepped portion 2c of the cylinder main body 2 and the leading end portion 8b of the guide sleeve 8, and is held not on the piston 3, but on the cylinder main body 2. This also brings about an effect of suppressing occurrence of squeak and rattle. Specifically, if the second annular sealer 17 is held on the piston 3, vibration created at a sliding-contact portion of the second annular sealer 17 with the inner circumferential surface of the guide sleeve 8 is more easily transmitted to the cylinder main body 2 not carrying the second annular sealer 17 than to the piston 3 carrying the second annular sealer 17, with the result that squeak and rattle are likely to occur at the outer surface of the cylinder main body 2. Contrary to this, if the second annular sealer 17 is held on the cylinder main body 2 as in this embodiment, vibration created at a sliding-contact portion of the second annular sealer 17 with the outer circumferential surface of the piston main body 5 is more easily transmitted to the piston 3 not carrying the second annular sealer 17 than to the cylinder main body 2 carrying the second annular sealer 17 and is transmitted to the cylinder main body 2 via the piston 3. Thus, squeak and rattle are difficult to occur at the outer surface of the cylinder main body 2. Vibration can be made more difficult to transmit by making the piston main body 5 of a metal having a relatively large mass as in this embodiment, thereby more effectively preventing an occurrence of squeak and rattle.

Further, since the first annular sealer 10 which slides on the inner circumferential surface of the cylinder hole 2a as the piston 3 moves back and forth is held in the annular recess 13 formed in the outer circumferential surface of the leading end portion of the piston main body 5, it is sufficient to lock only the second annular sealer 17 by the guide sleeve 8, thereby canceling the necessity to strongly couple the guide sleeve 8 and the cylinder main body 2. This enables the realization of more inexpensive costs.

Since the outer side of the first annular sealer 10 for providing sealing between the hydraulic chamber 14 and the hydraulic supplying chamber 19 is made of the hard outer seal ring 10b in this embodiment, it has a lower sealing performance than the second annular sealer 17. However, since the first annular sealer 10 provides sealing between the hydraulic chamber 14 and the hydraulic supplying chamber 19, a tiny leak of the fluid does not cause any problem. Thus, it is practically possible to effectively suppress an occurrence of squeak and rattle caused by the stick-slip phenomenon of the lip packing while ensuring a good sealing performance as described above.

Further, the piston 3 can be constructed by mounting the annular-recess forming member 6 from the leading end side after mounting the first annular sealer 10 into the annular recess 13. Accordingly, the first annular sealer 10 can be mounted onto the piston 3 without extending the diameter thereof beyond the one at which the first annular sealer 10 can be accommodated in the annular recess 13, thereby preventing a damage caused by extending the diameter more than necessary. When the guide sleeve 8 and the piston 3 are pulled out of the cylinder main body 2 and the annular-recess forming member 6 is detached, the first annular sealer 10 can be detached. On the other hand, the second annular sealer 17 can be detached after the guide sleeve 8 is pulled out of the cylinder main body 2. Thus, the master cylinder can be easily disassembled, and the first and second annular sealers 10, 17 can be replaced and inspected for maintenance.

Furthermore, since the locking device 9 for locking the guide sleeve 8 in the cylinder main body 2 is so constructed as to prevent the guide sleeve 8 from coming out by detachably mounting the locking member 9b on the cylinder main body 2, it becomes practically possible to use an inexpensive and easily detachable locking device 9, and the piston 3, the guide sleeve 8, the first and second annular sealers 10, 17 which are parts provided in the cylinder main body 2 can be practically disassembled by detaching this locking member 9b.

Although the present invention is applied to the master cylinder incorporated into the clutch device in the foregoing embodiment, it is not limited thereto and similarly applicable to master cylinders incorporated into braking devices.

As described above, an inventive master cylinder comprises a resin-made cylinder main body formed with a cylinder hole, a mount hole having a diameter larger than the cylinder hole and concentrically continuous with the cylinder hole and a stepped portion at a boundary between the mount hole and the cylinder hole; a piston pressed into the cylinder hole to define a hydraulic chamber in cooperation with the inner circumferential surface of the cylinder hole and including a leading end portion movable back and forth in the cylinder hole so as to expand and contract the hydraulic chamber; a guide sleeve having a leading end portion inserted into the mount hole at a distance from the stepped portion, adapted to guide a base end portion of the piston, and locked in the cylinder main body by a locking device; a first annular sealer which has two annular sealing members held on the outer circumferential surface at the leading end portion of the piston and slidable on the inner circumferential surface of the cylinder hole as the piston moves back and forth, wherein an inner annular sealing member is made of a soft material and an outer annular sealing member is made of a material harder than that of the inner annular sealing member; and a second annular sealer squeezed between the stepped portion and a leading end portion of the guide sleeve and having an elastically deformable sliding portion slidable on the outer circumferential surface of a rear end portion of the piston, wherein at least a portion of the outer circumferential surface of the piston to be held in contact with the second annular sealer is made of a metal.

Since the first annular sealer is a double annular sealer to be mounted and held onto the piston in this master cylinder, an occurrence of squeak and rattle caused by the stick-slip phenomenon can be effectively suppressed even if the cylinder main body is resin-made by making the outer annular sealing member of a hard material while ensuring a good sealing performance by the elastic deformation of the inner annular sealing member. The elastically deformable sliding portion of the second annular sealer is slidable on the outer circumferential surface of the piston, and at least the portion of the outer circumferential surface of the piston to be held in contact with the second annular sealer is made of a metal. Thus, the second annular sealer can also suppress an occurrence of squeak and rattle caused by the stick-slip phenomenon while ensuring a good sealing performance.

Further, since the first annular sealer slidable on the inner circumferential surface of the cylinder hole as the piston moves back and forth is held on the outer circumferential surface of the leading end portion of the piston, it is sufficient to lock only the second annular sealer by the guide sleeve (the second annular sealer provides sealing between the hydraulic supplying chamber and a side of an atmospheric pressure), thereby canceling the necessity to strongly couple the guide sleeve and the cylinder main body. This enables the realization of more inexpensive costs.

Preferably, the first annular sealer partitions a hydraulic supplying chamber defined between the piston and the cylinder hole and between the first and second annular sealers and the hydraulic chamber to which a hydraulic fluid is supplied from the hydraulic supplying chamber.

With this arrangement, the first annular sealer or double annular sealer providing sealing between the hydraulic chamber and the hydraulic supplying chamber has a lower sealing performance than the second annular sealer since the outer side thereof is the hard sealing member. However, since a position where sealing is given by the first annular sealer is located between the hydraulic chamber and the hydraulic supplying chamber, there is no problem even if a tiny amount of the hydraulic fluid leaks. Therefore, it is practically possible to effectively suppress an occurrence of squeak and rattle caused by the stick-slip phenomenon while ensuring a sufficient sealing function at this position.

Preferably, the piston may include an annular-recess forming member to be mounted onto the leading end portion thereof to form an annular recess on the outer circumferential surface of the piston, and the first annular sealer is held in the annular recess.

With this arrangement, the piston can be constructed by mounting the annular-recess forming member after mounting the first annular sealer into the annular recess. Accordingly, the first annular sealer can be mounted onto the piston without extending the diameter thereof beyond the one at which the first annular sealer can be accommodated in the annular recess, thereby preventing a damage caused by extending the diameter more than necessary. When the guide sleeve and the piston are pulled out of the cylinder main body and the annular-recess forming member is detached, the first annular sealer can be detached. On the other hand, the second annular sealer can be detached after the guide sleeve is pulled out of the cylinder main body. Thus, the master cylinder can be easily disassembled, and the first and second annular sealers can be replaced and inspected for maintenance.

Preferably, the locking device may include a locking member detachably mountable on the cylinder main body to prevent the guide sleeve from coming out.

With this arrangement, since the locking device for locking the guide sleeve in the cylinder main body prevents the guide sleeve from coming out by mounting the detachable locking member onto the cylinder main body, it becomes practically possible to use an inexpensive and easily detachable locking device and to disassemble the parts provided in the cylinder main body by detaching this locking member.

This application is based on patent application No. 2003-360561 filed in Japan.

Although the present invention has been fully described by way of example with reference to the accompanied drawings, it is to be understood that various changes and modifications will be apparent to those skilled in the art.

## Claims

1. A master cylinder, comprising:
a cylinder main body (2) which is made of a resin, and includes a cylinder hole (2a), a mount hole (2b) having a diameter larger than the cylinder hole (2a) and concentrically continuous with the cylinder hole (2a), and a stepped portion (2c) at a boundary between the mount hole (2b) and the cylinder hole (2a);
a piston (3) which is placed in the cylinder hole (2a) to define a hydraulic chamber (14) in cooperation with the inner circumferential surface of the cylinder hole (2a), and includes a leading end portion movable back and forth in the cylinder hole (2a) so as to expand and contract the hydraulic chamber (14);
a guide sleeve (8) which has a leading end portion inserted in the mount hole (2b) at a distance from the stepped portion (2c), and adapted to guide a base end portion of the piston (3), and is locked in the cylinder main body (2);
a first annular sealer (10); and
a second annular sealer (17) squeezed between the stepped portion (2c) and a leading end portion of the guide sleeve (8) and having an elastically deformable sliding portion slidable on the outer circumferential surface of a rear end portion of the piston (3), at least a portion of the outer circumferential surface of the piston (3) to be held in contact with the second annular sealer (17) being made of a metal;
**characterised in that** said first annular sealer has an inner annular sealing member (10a) and an outer annular sealing member (10b) held on the outer circumferential surface at the leading end portion of the piston (3) and slidable on the inner circumferential surface of the cylinder hole (2a) as the piston (3) moves back and forth, the inner annular sealing member (10a) being made of a soft material and the outer annular sealing member (10b) being made of a material harder than that of the inner annular sealing member (10a) .

2. A master cylinder according to claim 1, **characterised in that** it further comprises a locking device (9) for locking the guide sleeve (8) in the cylinder main body (2).

3. A master cylinder according to claim 1 or 2, **characterised in that** the first annular sealer (10) partitions a hydraulic supplying chamber (19) defined between the piston (3) and the cylinder hole (2a) and between the first and second annular sealers (10, 17) and the hydraulic chamber (14) to which a hydraulic fluid is supplied from the hydraulic supplying chamber (19).

4. A master cylinder according to any one of claims 1 to 3, **characterised in that** the piston (3) includes an annular-recess forming member (6) to be mounted onto the leading end portion thereof to form an annular recess in the outer circumferential surface of the piston (3), and the first annular sealer (10) is held in the annular recess.

5. A master cylinder according to any one of claims 2 to 4, **characterized in that** the locking device (9) includes a locking member (9b) detachably mountable on the cylinder main body (2) to prevent the guide sleeve (8) from coming out.

## Patentansprüche

1. Geberzylinder, umfassend:
einen Zylinderhauptkörper (2), welcher aus einem Harz gefertigt bzw. hergestellt ist, und ein Zylinderloch (2a), ein Montageloch (2b), das einen Durchmesser größer als das Zylinderloch (2a) aufweist und konzentrisch ununterbrochen bzw. anschließend an das Zylinderloch (2a) ist, und einen abgestuften Abschnitt (2c) an einer Grenze zwischen dem Montageloch (2b) und dem Zylinderloch (2a) beinhaltet;
einen Kolben (3), welcher in dem Zylinderloch (2a) angeordnet ist, um eine hydraulische bzw. Hydraulikkammer (14) in Wechselwirkung mit der Innenumfangsoberfläche des Zylinderlochs (2a) zu definieren, und einen Führungs- bzw. vorderen Endabschnitt beinhaltet, der rückwärts und vorwärts in dem Zylinderloch (2a) bewegbar ist, um die Hydraulikkammer (14) aufzuweiten und zusammenzuziehen bzw. zu vergrößern und zu verkleinern;
eine Führungshülse (8), welche einen Führungs- bzw. vorderen Endabschnitt aufweist, der in das Montageloch (2b) in einem Abstand von dem abgestuften Abschnitt (2c) eingesetzt ist, und adaptiert ist, um einen Basisendabschnitt des Kolbens (3) zu führen, und in dem Zylinderhauptkörper (2) verriegelt ist;
ein erstes ringförmiges Dichtelement (10); und
ein zweites ringförmiges Dichtelement (17), das zwischen dem abgestuften Abschnitt (2c) und einem Führungs- bzw. vorderen Endabschnitt der Führungshülse (8) eingequetscht ist und einen elastisch deformierbaren Gleitabschnitt aufweist, der auf der äußeren Umfangsoberfläche eines rückwärtigen Endabschnitts des Kolbens (3) gleitbar ist, wobei wenigstens ein Abschnitt der Außenumfangsoberfläche des Kolbens (3), um in Kontakt mit dem zweiten ringförmigen Dichtelement (17) gehalten zu sein, aus einem Metall hergestellt ist,
**dadurch gekennzeichnet, daß** das erste ringförmige Dichtelement ein inneres ringförmiges Dichtglied (10a) und ein äußeres ringförmiges Dichtglied (10b) aufweist, das an der Außenumfangsoberfläche an dem vorderen Endabschnitt des Kolbens (3) gehalten ist und an der inneren Umfangsoberfläche des Zylinderlochs (2a) gleitbar ist, wenn sich der Kolben (3) rückwärts und vorwärts bewegt, wobei das innere ringförmige Dichtglied (10a) aus einem weichen Material hergestellt ist und das äußere ringförmige Dichtglied (10b) aus einem Material härter als jenes des inneren ringförmigen Dichtglieds (10a) hergestellt ist.

2. Geberzylinder nach Anspruch 1, **dadurch gekennzeichnet, daß** er weiterhin eine verriegelnde bzw. Verriegelungsvorrichtung (9) zum Verriegeln der Führungshülse (8) in dem Zylinderhauptkörper (2) umfaßt.

3. Geberzylinder nach einem der Ansprüche 1 oder 2, **dadurch gekennzeichnet, daß** das erste ringförmige Dichtglied (10) eine Hydraulikzufuhrkammer (19) unterteilt, die zwischen dem Kolben (3) und dem Zylinderloch (2a) und zwischen dem ersten und zweiten ringförmigen Dichtelement (10, 17) und der hydraulischen Kammer (14) definiert ist, zu welcher ein Hydraulikfluid von der hydraulischen Zufuhrkammer (19) zugeführt ist.

4. Geberzylinder nach einem der Ansprüche 1 bis 3, **dadurch gekennzeichnet, daß** der Kolben (3) ein eine ringförmige Vertiefung bildendes Glied (6) beinhaltet, das an dem vorderen Endabschnitt davon festzulegen bzw. zu montieren ist, um eine ringförmige Vertiefung bzw. Aussparung in der Außenumfangsoberfläche des Kolbens (3) auszubilden, und das erste ringförmige Dichtelement (10) in der ringförmigen Vertiefung gehalten ist.

5. Geberzylinder nach einem der Ansprüche 2 bis 4, **dadurch gekennzeichnet, daß** die Verriegelungsvorrichtung (9) ein verriegelndes bzw. Verriegelungsglied (9b) beinhaltet, das lösbar an dem Zylinderhauptkörper (2) montierbar ist, um die Führungshülse (8) an einem Austreten zu hindern.

## Revendications

1. Maître-cylindre, comprenant :
un corps principal (2) de cylindre qui est en résine et qui comporte un alésage de cylindre (2a), un trou de montage (2b) présentant un diamètre plus grand que l'alésage de cylindre (2a) et concentriquement continu avec l'alésage de cylindre (2a), et une partie d'épaulement (2c) située à une limite entre le trou de montage (2b) et l'alésage de cylindre (2a) ;
un piston (3) qui est disposé dans l'alésage de cylindre (2a) pour définir une chambre hydraulique (14) en coopération avec la surface circonférentielle intérieure de l'alésage de cylindre (2a), et qui comporte une partie d'extrémité avant déplaçable d'avant en arrière dans l'alésage de cylindre (2a) de manière à agrandir et réduire la chambre hydraulique (14) ;
un manchon de guidage (8) qui présente une partie d'extrémité avant qui est insérée dans le trou de montage (2b)à distance de la partie d'épaulement (2c), et adaptée pour guider une partie d'extrémité de base du piston (3), et qui est verrouillée dans le corps principal de cylindre (2) ;
une première garniture d'étanchéité annulaire (10) ; et
une seconde garniture d'étanchéité annulaire (17) comprimée entre la partie d'épaulement (2c) et une partie d'extrémité avant du manchon de guidage (8) et ayant une partie de coulissement élastiquement déformable qui coulisse sur la surface extérieure circonférentielle d'une partie d'extrémité arrière du piston (3), au moins une partie de la surface circonférentielle extérieure du piston (3)qui doit être maintenue en contact avec la seconde garniture d'étanchéité annulaire (17) étant en métal,
**caractérisé en ce que** ladite première garniture d'étanchéité annulaire présente un élément d'étanchéité annulaire intérieur (10a) et un élément d'étanchéité annulaire extérieur (10b) maintenu sur la surface circonférentielle extérieure à la partie d'extrémité avant du piston (3) et coulissant sur la surface circonférentielle intérieure de l'alésage de cylindre (2a) quand le piston (3) va et vient, l'élément d'étanchéité annulaire intérieur (10a) étant fait d'une matière souple et l'élément d'étanchéité annulaire extérieur (10b) étant fait d'une matière plus dure que celle de l'élément d'étanchéité annulaire intérieur (10a).

2. Maître-cylindre (1) selon la revendication 1, **caractérisé en ce qu'**il comprend en outre un dispositif de verrouillage (9) pour verrouiller le manchon de guidage (8) dans le corps principal de cylindre (2).

3. Maître-cylindre (1) selon l'une des revendications 1 ou 2, **caractérisé en ce que** la première garniture d'étanchéité annulaire (10) compartimente une chambre d'alimentation hydraulique (19) définie entre le piston (3) et l'alésage de cylindre (2a) et entre les première et seconde garniture d'étanchéité annulaire (10, 17) et la chambre hydraulique (14) que la chambre d'alimentation hydraulique (19) alimente en fluide hydraulique.

4. Maître-cylindre (1) selon l'une quelconque des revendications 1 à 3, **caractérisé en ce que** le piston (3) comprend un élément (6) formant une cavité annulaire qui doit être monté sur une partie d'extrémité avant de celui-ci pour former une cavité annulaire dans la surface circonférentielle extérieure du piston (3), et **en ce que** la première garniture d'étanchéité annulaire (10) est maintenue dans la cavité annulaire.

5. Maître-cylindre (1) selon l'une quelconque des revendications 1 à 3, **caractérisé en ce que** le dispositif de verrouillage (9) comporte une élément de verrouillage (9b) montable de façon détachable sur le corps principal de cylindre (2) pour empêcher le manchon de guidage (8) de sortir.
